(19) Europäisches Patentamt

European Patent Office

Office européen des brevets

(11) **EP 1 053 949 B1**

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(51) Int Cl.⁷: **B65D 43/16**

(21) Anmeldenummer: **00108749.3**

(22) Anmeldetag: **20.04.2000**

(54) **Deckelvorrichtung für einen Komposter**

Closure device for a composter

Dispositif de couvercle pour un composteur

(84) Benannte Vertragsstaaten:
**DE**

(30) Priorität: **19.05.1999 DE 19922984**

(43) Veröffentlichungstag der Anmeldung:
**22.11.2000 Patentblatt 2000/47**

(73) Patentinhaber: **Starplast Kunststoffverarbeitung GmbH**
**06667 Weissenfels (DE)**

(72) Erfinder: **Sondershausen, Jens**
**06618 Naumburg (DE)**

(74) Vertreter: **Ganahl, Bernhard et al**
**Huber & Schüssler**
**Patentanwälte**
**Truderinger Strasse 246**
**81825 München (DE)**

(56) Entgegenhaltungen:
**EP-A- 0 538 511          US-A- 2 547 353**
**US-A- 4 320 852          US-A- 5 328 048**

**Beschreibung**

Die Erfindung betrifft einen Komposter mit einer Deckelvorrichtung.

Zur Abdeckung von oben offenen Komposterbehältern sind unterschiedliche Deckelvorrichtungen bekannt. So gibt es einen Komposter, der unter der Markenbezeichnung KOMPOSTAR® vertrieben wird und einen aus zwei Hälften bestehenden Deckel aufweist. Die beiden Deckelhälften liegen auf dem Komposterbehälter auf und sind miteinander mittels eines Scharniergelenkes verbunden, so daß jeweils eine der beiden Deckelhälften um das Scharniergelenk aufgeklappt werden kann. Dieser Komposterbehälter ist in der EP 0 538 511 B1 beschrieben.

Zum vollständigen Öffnen des Komposterbehälters muß jedoch der gesamte Deckel abgenommen werden, was aufgrund des Gewichtes des Deckels wesentlich anstrengender ist, als wenn man lediglich eine Hälfte aufklappt.

Ferner ist ein Komposterbehälter mit einem Deckel bekannt, bei dem der Deckel schwenkbar auf der Oberkante der Rückwandung des Komposterbehälters aufliegt und mittels eines Drahtbügels in einer nach oben verschwenkten Stellung arretiert werden kann. Darüber hinaus kann dieser Deckel aus dieser arretierten Stellung durch Anheben des auf der Rückwandung aufliegenden Bereiches über die Rückwandung hinaus verschwenkt und abgesenkt werden, so daß der Deckel an der Rückwandung flächig anliegt. Hierbei wird der Deckel wiederum durch den Drahtbügel arretiert, der bei dieser Bewegung mitgeschwenkt wird.

Mit dieser Deckelvorrichtung ist es somit möglich, bei einer ersten Öffnungsstellung den Komposterbehälter teilweise zu öffnen und dann den Deckel in eine zweite Öffnungsstellung vollständig wegzuschwenken. Bei dieser teilweise geöffneten Stellung des Deckels können kleinere Mengen zu kompostierenden Gutes in den Komposterbehälter eingefüllt werden. Das Einfüllen von größeren Mengen wird durch den Drahtbügel behindert. Zum Erreichen dieser teilweise geöffneten Stellung muß der gesamte Deckel angehoben werden, was entsprechend anstrengend ist, um lediglich kleine Mengen zu kompostierenden Gutes in den Komposter zu geben. Zudem ist der Übergang von der teilweise geöffneten Stellung in die vollständig geöffnete Stellung ergonomisch ungünstig, falls der Deckel am Griff betätigt wird, da er über mit einem kurzen Hebel (Länge zwischen dem Drahtbügel und dem Griff) an seinem rückwärtigen Bereich angehoben werden muß und dann ungebremst ein Stück nach unten fallen kann. Zudem kann in der teilweise geöffneten Stellung der Wind den Behälterdeckel erfassen und ihn aus seiner Verankerung lösen.

Aus der US 2,545,959 geht ein Radiogerät hervor, das in ein quaderförmiges Gehäuse eingebaut ist. Das Gehäuse ist oben mit einem beweglichen Deckel abgedeckt. Der Deckel ist mittels Hebelstangen an den Seitenwandungen des Gehäuses derart angelenkt, dass er beim Öffnen zunächst etwas angehoben und dann hinter einer Rückwand des Gehäuses versenkt wird. Hierdurch soll sichergestellt sein, dass der Deckel in seiner geöffneten Position nicht eine ausfahrbare Antenne abschirmt.

Der Erfindung liegt die Aufgabe zugrunde, einen Komposter mit einer Deckelvorrichtung zu schaffen, die technisch einfach ausgebildet ist, ein leichtes teilweises Öffnen des Komposters erlaubt, so daß kleine Mengen zu kompostierenden Gutes zugegeben werden können, und die auch eine vollständige Öffnung des Komposters erlaubt.

Die Aufgabe wird durch einen Komposter mit einer Deckelvorrichtung mit den Merkmalen des Anspruchs 1 gelöst. Vorteilhafte Ausgestaltungen der Erfindung sind in den Unteransprüchen angegeben.

Der erfindungsgemäße Komposter mit einer Deckelvorrichtung umfaßt ein etwa plattenförmiges Deckelelement zum Abdecken eines oben offenen Komposterbehälters, der eine Rückwandung und zwei an die Rückwandung angrenzende Seitenwandungen aufweist,

ein Hebelelement, das am Deckelelement und jeweils an den Seitenwandungen des Komposterbehälters angelenkt ist, und

es gilt folgende Formel

$$l > \sqrt{a^2 + b^2},$$

wobei l der Abstand zwischen dem Anlenkpunkt des Hebelelementes am Deckelelement und dem Anlenkpunkt des Hebelelementes an den Seitenwandungen, a der Abstand des Anlenkpunktes des Hebelelementes an den Seitenwandungen zur Rückwandung und b der Abstand des Anlenkpunktes des Hebelelementes an den Seitenwandungen zur Oberkante des Komposterbehälters sind.

Die Anordnung des Hebelelementes ist demgemäß so gewählt, daß das Deckelelement in Richtung zur Rückwandung des Komposterbehälters verschoben werden kann, wobei das Hebelelement zur Rückwandung des Komposterelementes geschwenkt wird, wobei zumindest bei der Endstellung, bei der das Hebelelement an der Rückwand anliegt, der Anlenkpunkt des Hebelelementes am Komposterdeckel über die Oberkante der Rückwandung vorsteht oder zumindest auf der Oberkante der Rückwandung aufliegt, so daß das Deckelelement um diesen Anlenkpunkt in eine vertikale Stellung verschwenkt werden kann, bei der der Komposterbehälter vollständig geöffnet ist.

Die erfindungsgemäße Deckelvorrichtung sieht somit zwei Öffnungsstellungen vor. In die erste Öffnungsstellung gelangt das Deckelelement lediglich durch horizontales Verschieben in Richtung zur Rückwandung. Dieses Verschieben erfolgt ohne großen Kraftaufwand, da das Deckelelement durch das Hebelelement lediglich geringfügig angehoben und wieder abgesenkt wird. In der ersten Öffnungsstellung können kleine Mengen zu kompostierenden Gutes dem Komposter zugeführt werden. Zusätzlich kann das Deckelelement in die zweite Öffnungsstellung, eine etwa senkrechte Stellung, verschwenkt werden, bei der die Öffnung des Komposterbehälters vollständig freiliegt.

Die erfindungsgemäße Deckelvorrichtung ist auch äußerst einfach und daher kostengünstig ausgebildet, da das Deckelelement und der Komposterbehälter lediglich mittels des Hebelelementes miteinander verbunden sind und keine weiteren Elemente zum Fixieren oder Halten der Deckelvorrichtung vorgesehen werden müssen.

Bei einer vorteilhaften Ausführungsform der Erfindung ist das Deckelelement zweiteilig aus zwei Deckelhälften ausgebildet, die jeweils mit einem entsprechenden Schwenkmechanismus versehen sind.

Die Erfindung wird nachfolgend beispielhaft anhand der in den Zeichnungen gezeigten Ausführungsbeispielen der Erfindung näher beschrieben. In den Zeichnungen zeigen:

Fig. 1    einen erfindungsgemäßen Komposter mit einer Deckelvorrichtung mit einem einteiligen Deckel während des Verschiebens des Deckels in eine erste Öffnungsstellung in einer Schnittansicht mit Blickrichtung von der Seite,

Fig. 2    den Komposter aus Fig. 1 in der ersten Öffnungsstellung in einer Schnittansicht mit Blickrichtung von der Seite,

Fig. 3    den Komposter aus Fig. 1 in der zweiten Öffnungsstellung in einer Schnittansicht mit Blickrichtung von der Seite,

Fig. 4    den Komposter aus Fig. 1 in der zweiten Öffnungsstellung in einer Schnittansicht mit Blickrichtung von vorne,

Fig. 5    einen Komposter mit einer erfindungsgemäßen Deckelvorrichtung mit einem zweiteiligen Deckel während einer Verschiebebewegung der Deckelhälften in eine erste Öffnungsstellung in einer Schnittansicht mit Blickrichtung von der Seite,

Fig. 6    den Komposter aus Fig. 5 in der ersten Öffnungsstellung in einer Schnittansicht mit Blickrichtung von der Seite und

Fig. 7    den Komposter aus Fig. 5 in der zweiten Öffnungsstellung in einer Schnittansicht mit Blickrichtung von der Seite.

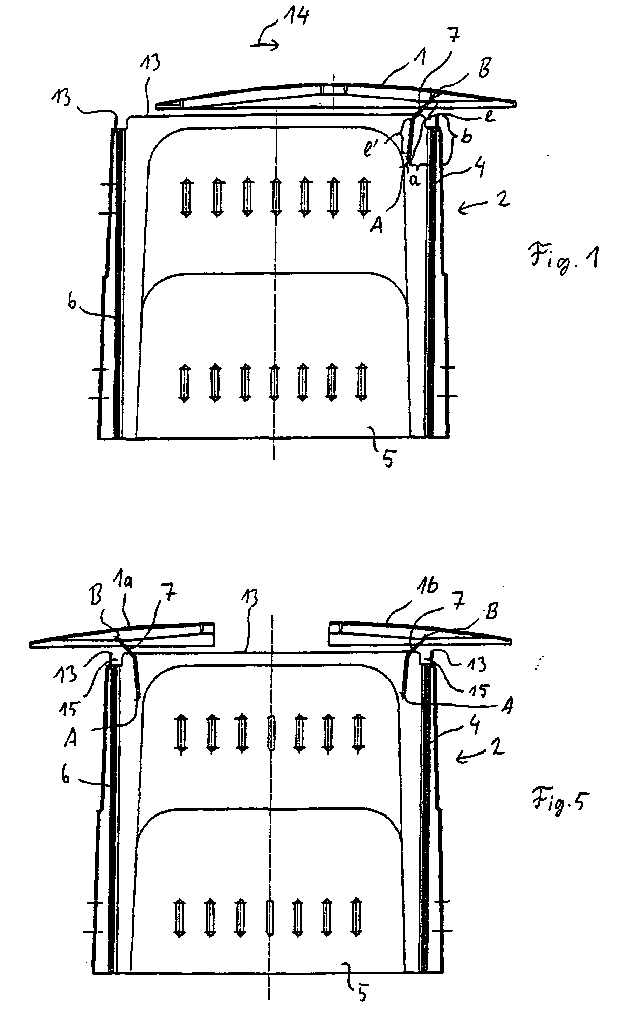

Die Figuren 1 bis 4 zeigen ein erstes Ausführungsbeispiel eines erfindungsgemäßen Komposters mit einer Deckelvorrichtung. Die Deckelvorrichtung weist einen in der Draufsicht etwa rechteckigen bzw. quadratischen, etwa plattenförmigen Deckel 1 auf, der bei geschlossenem Komposter auf einen Komposterbehälter 2 aufliegt und den Komposterbehälter 2 am Randbereich mit nach unten vorstehenden Stegen 3 hintergreift.

Der Komposterbehälter 2 weist eine Rückwandung 4, zwei Seitenwandungen 5 und eine Frontwandung 6 auf. Im dargestellten Ausführungsbeispiel sind die Wandungen 4 bis 6 alle identisch ausgebildet, so daß der Komposterbehälter 2 in der Draufsicht eine quadratische Form besitzt. Im Rahmen der Erfindung ist es jedoch auch möglich, die erfindungsgemäße Deckelvorrichtungen für Komposterbehälter mit anderen Formen vorzusehen.

Die einzelnen Wandungen 4 bis 6 sind lösbar miteinander verbunden. Geeignete Verbindungsmittel sind z.B. in der EP 0 538 511 B1 beschrieben.

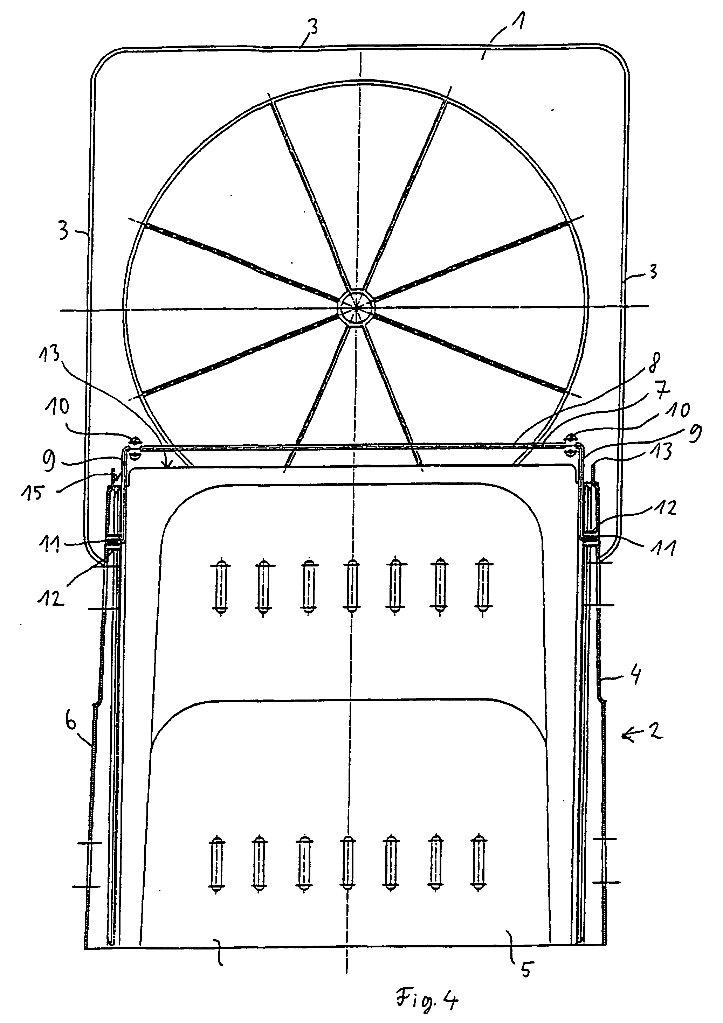

Der Deckel 1 ist mit dem Komposterbehälter 2 mittels eines Hebelelementes 7 verbunden, das als U-förmiger Drahtbügel 7 ausgebildet ist (Fig. 4). Der Drahtbügel 7 weist zwei über einen Verbindungsstab 8 verbundene Hebelarme 9 auf, die wesentlich kürzer als der Verbindungsstab 8 sind. Der Verbindungsstab 8 liegt unmittelbar am Deckel 1 an und erstreckt sich fast über die gesamte Breite des Deckels 1. Der Verbindungsstab 8 ist am Deckel 1 mit zwei Schellen 10 drehbar befestigt. Die Hebelarme 9 sind zueinander parallel ausgebildet und besitzen die gleiche Länge. An den freien Enden der Hebelarme 9 ist jeweils ein Gelenkfortsatz 11 nach außen abgewinkelt. Zur Aufnahme der Gelenkfortsätze 11 sind in den Seitenwandungen 5 jeweils eine Gelenköse 12 ausgebildet. In den Gelenkösen 12 sitzen die beiden Gelenkfortsätze 11, so daß der Drahtbügel 7 um einen durch die Gelenkösen 12 festgelegten Anlenkungspunkt A schwenkbar ist. Die beiden Anlenkungspunkte A der sich gegenüberliegenden Seitenwandungen 5 legen somit eine Schwenkachse A-A fest, um welche der Drahtbügel 7 geschwenkt werden kann.

Die Schellen 10, mit welchen der Deckel 1 schwenkbar am Drahtbügel 7 befestigt ist, legen weitere Anlenkungspunkte B fest, die eine Schwenkachse B-B definieren, um die der Deckel 1 geschwenkt werden kann.

Die Anordnung des Anlenkungspunktes A an den Seitenwandungen 5, des Anlenkungspunktes B am Deckel 1 und der Abstand zwischen den beiden Anlenkungspunkten A und B ist derart gewählt, daß zum einen der Deckel 1 auf den Oberkanten 13 der Seitenwandungen 4 bis 6 aufliegen kann und dabei gleichmäßig mit seinen Stegen 3 die Oberkanten 13 hintergreift, und zum anderen der Deckel 1 durch eine Verschiebebewegung in Richtung 14 zur Rückwandung 4 verschoben werden kann, wobei der Verbindungsstab 8 bzw. die Schwenkachse B-B des Deckels 1 am Hebelelement 7 über die Oberkante 13 der Rückwandung 4 geschwenkt werden kann. Hierzu ist es notwendig, daß der Abstand l zwischen den Anlenkungspunkten A und B nicht kleiner als die Wurzel der Summe der Quadrate der Abstände a und b ist, wobei der Abstand a der Abstand des Anlenkungspunktes des Hebelelementes 7 an der Seitenwandung 5 zur Rückwandung 4 und b der Abstand des Anlenkungspunktes des Hebelelementes 7 an der Seitenwandung 5 zur Oberkante 13 des Komposterbehälters 2 sind. Diese Beziehung kann auch durch folgende Formel ausgedrückt werden:

$$l > \sqrt{a^2 + b^2},$$

Die Rückwandung 4 weist an den Endbereichen der Oberkante 13 Ausnehmungen bzw. Aussparungen 15 auf, in die der Drahtbügel 7 mit seinen Hebelarmen 9 geschwenkt werden kann und in welche die Hebelarme 9 zu Anlage an der Rückwandung 4 kommen können. Beim Vorsehen derartiger Ausnehmungen 15 können die Hebelarme 9 in einen Bereich unterhalb der Oberkante 13 der Rückwandung 4 verschwenkt werden. Der Drahtbügel ist im Bereich der Kontaktstelle zwischen der Rückwandung 4 und den Hebelarmen 9 in Richtung zur Rückwandung 4 abgewinkelt, so daß die Hebelarme 9 mit ihren Schenkeln einen stumpfen Winkel von z.B. 100° bis 140° einschließen. Da die Knickstelle der Hebelarme 9 etwa an dem Punkt vorgesehen sind mit welchen die Hebelarme 9 an der Rückwandung 4 anliegen, beträgt der Abstand l' der Knickstelle von den Anlenkungspunkten A etwa die Wurzel der Summe aus den Quadraten von a und b. Der Abstand l' kann somit mit folgender Formel angegeben werden:

$$l' > \sqrt{a^2 + b^2},$$

Bei einem weiteren Ausführungsbeispiel der erfindungsgemäßen Deckelvorrichtung (Fig. 5 bis 7) besteht der Deckel 1 aus zwei separat ausgebildeten Deckelhälften 1a, 1b wobei die Deckelhälfte 1b wie beim oben beschriebenen ersten Ausführungsbeispiel mit ihrer Schwenkachse B-B über die Oberkante 13 der Rückwandung 4 geschwenkt werden kann und die andere Deckelhälfte 1a mit einem entsprechenden Schwenkmechanismus versehen ist, um mit ihrer Schwenkachse B-B über die Oberkante 13 der Frontwandung 6 geschwenkt zu werden.

Nachfolgend wird die Funktionsweise der erfindungsgemäßen Deckelvorrichtung anhand des in den Figuren 1 bis 4 gezeigten Ausführungsbeispieles näher erläutert.

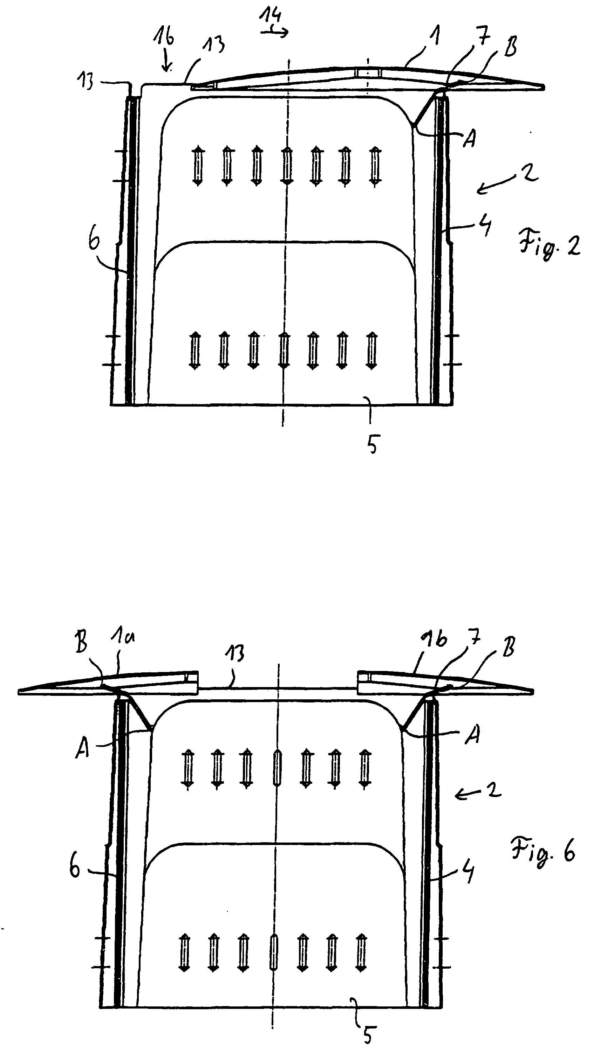

Der Deckel 1 kann ausgehend von einer geschlossen Stellung (nicht dargestellt), bei welcher der Deckel auf der umlaufenden Oberkante 13 des Komposterbehälters 2 aufliegt und diesen mit seinen Stegen 3 hintergreift, durch leichtes Anheben im Bereich der Frontwandung 6 und Verschieben des Deckels 1 in Richtung 14 zur Rückwandung 4 in eine erste Öffnungsstellung (Fig. 2) verbracht werden. Hierbei ist eine Öffnung 16 zwischen der Frontwandung 6 und dem Deckel 1 aufgeschoben, durch welche kleinere Mengen an kompostierbaren Gut in den Komposterbehälter 2 gefüllt werden können. Der Deckel liegt hierbei horizontal auf dem Komposterbehälter 2 auf, so daß beim Verschieben in diese erste Öffnungsstellung keine großen Kräfte notwendig sind, wie sie beim Anheben des Deckels 1 notwendig wären. Zudem bietet der Deckel in der ersten Öffnungsstellung keinerlei Angriffsfläche für Wind, weshalb selbst bei stürmischen Wetter einfach und schnell der Komposter ein Stück geöffnet und zu kompostierendes Gut hinzugegeben werden kann.

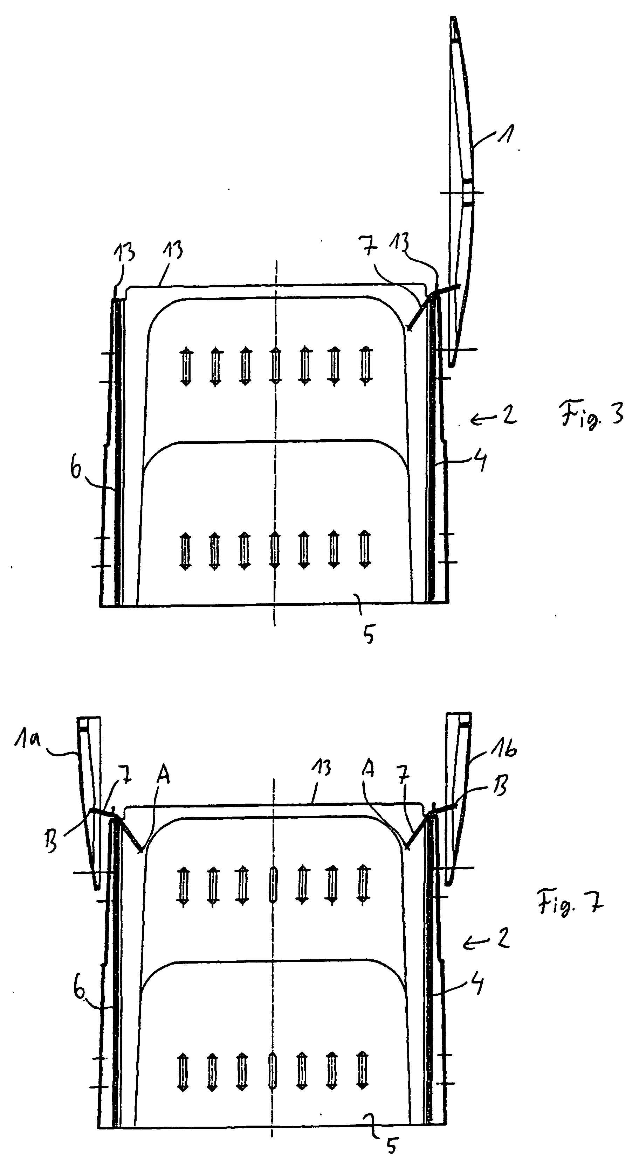

Da sich in dieser ersten Öffnungsstellung die Schwenkachse B-B außerhalb des Komposterbehälters 2 benachbart zur Rückwandung 4 befindet, kann der Deckel 1 um die Schwenkachse B-B in die zweite Öffnungsstellung (Fig. 3) verschwenkt werden, in welcher der Deckel 1 etwas gegenüber der Senkrechten nach hinten weggekippt ist und sich mit seinem unteren Randbereich an der Rückwandung 4 abstützt.

Wie man anhand von Fig. 3 und Fig. 4 gut erkennen kann, ist die Öffnung des Komposterbehälters in der zweiten Öffnungsstellung seitlich und nach vorne völlig frei von irgendwelchen Elementen des Schwenkmechanismus oder des Deckels 1, so daß der Komposterbehälter ungehindert gefüllt werden kann.

Der Deckel kann auch von seiner Ausgangsstellung, bei der er den Komposterbehälter 2 vollständig verschließt, direkt in die zweite Öffnungsstellung gebracht werden, indem er z.B. an seinen über die Frontwandung 6 greifenden Steg 3 angehoben und direkt in die zweite Öffnungsstellung verschwenkt wird.

Beim Schließen des Komposters wird der Deckel in entsprechender Weise zurückgeschwenkt.

Die beiden Deckelhälften des in den Figuren 7 bis 9 gezeigten zweiten Ausführungsbeispieles lassen sich in gleicher Weise öffnen und schließen.

Die Erfindung ist oben anhand zweier Ausführungsbeispiele näher erläutert worden. Sie ist jedoch nicht auf die konkrete Ausgestaltung dieser Ausführungsbeispiele beschränkt. Im Rahmen der Erfindung ist es z.B. auch möglich, anstelle eines abgewinkelten Hebelarmes geradlinige Hebelarme vorzusehen. Ferner kann die Form des Komposterbehälters 2 beliebig variiert werden, wobei jedoch die Oberkante über die Wandung, über welche der Deckel geschwenkt wird (im vorliegenden Beispiel die Rückwandung 4) vorzugsweise geradlinig ausgebildet ist. Bei einer weiteren Abwandlung der Erfindung kann der Deckel bspw. in Schienen verschieblich gelagert sein, und eine Schwenkachse am Deckel ausgebildet sein, die bei einer Verschiebebewegung über die Rückwandung des Deckels geschoben werden kann, so daß der Deckel vollständig aufgeklappt werden kann.

Die Erfindung kann folgendermaßen kurz beschrieben werden:

Die Erfindung betrifft eine Deckelvorrichtung für einen Komposter. Die Deckelvorrichtung ist mit einem Schwenkmechanismus versehen, mit welchem der Deckel lediglich durch Verschieben in eine erste Öffnungsstellung verbracht werden kann, in der kleinere Mengen zu kompostierenden Gutes dem Komposter zugeführt werden können, und die es erlaubt, daß der Deckel in einer zweiten Öffnungsstellung geschwenkt werden kann, in der die Öffnung des Komposterbehälters vollständig frei von Elementen des Schwenkmechanismus ist. Dies ermöglicht ein ungehindertes Befüllen des Komposterbehälters. Der Schwenkmechanismus ist aus einem Hebelelement ausgebildet, das den Deckel mit dem Komposterbehälter verbindet, wobei das Hebelelement sowohl am Komposterbehälter als auch am Deckel angelenkt ist. Die Länge und die Anordnung des Hebelelementes ist vorzugsweise derart bemessen, daß bei der Verschiebebewegung in die erste Öffnungsstellung der Deckel mit seiner Schwenkachse über die Oberkante der Rückwandung verschoben werden kann.

**Bezugszeichenliste**

1 Deckel
2 Komposterbehälter
3 Stege
4 Rückwandung
5 Seitenwandung
6 Frontwandung
7 Hebelelement
8 Verbindungsstab
9 Hebelarme
10 Schelle
11 Gelenkfortsatz
12 Gelenköse
13 Oberkante
14 Verschieberichtung
15 Ausnehmung
16 Öffnung

**Patentansprüche**

1. Komposter mit einer Deckelvorrichtung, mit einem plattenförmigen Deckelelement (1) zum Abdecken eines oben offenen Komposterbehälters (2), der eine Rückwandung (4) und zwei an die Rückwandung (4) angrenzende Seitenwandungen (5) aufweist,
**dadurch gekennzeichnet,**
**dass** ein Hebelelement (7) am Deckelelement (1) und jeweils an den Seitenwandungen (5) des Komposterbehälters (2) angelenkt ist und folgende Formel gilt

$$l > \sqrt{a^2 + b^2},$$

wobei l der Abstand zwischen dem Anlenkpunkt (B) des Hebelelements (7) am Deckelelement (1) und dem Anlenkpunkt (A) des Hebelelements an den Seitenwandungen (5), a der Abstand des Anlenkpunktes (A) des Hebelelements (7) an den Seitenwandungen (5) zur Rückwandung (4) und b der Abstand des Anlenkpunktes (A) des Hebelelementes (7) an den Seitenwandungen (5) zur Oberkante (13) des Komposterbehälters (2) sind.

2. Komposter nach Anspruch 1,
**dadurch gekennzeichnet,**
**daß** das Hebelelement (7) am Abstand

$$l' \approx \sqrt{a^2 + b^2},$$

vom Anlenkpunkt (A) des Hebelelements (7) an den Seitenwandungen (5) in Richtung zur Rückwandung (4) abgewinkelt ist.

3. Komposter nach Anspruch 1 oder 2,
**dadurch gekennzeichnet,**
**daß** die Rückwandung (4) und die Seitenwandungen (5) ebenflächig ausgebildet sind und im rechten Winkel aneinander angesetzt sind.

4. Komposter nach einem der Ansprüche 1 bis 3,
**dadurch gekennzeichnet,**
**daß** die Rückwandung (4) im Bereich des Hebelelements (7) eine Ausnehmung (15) derart aufweist, daß bei einer Verschwenkung des Hebelelements (7) in Richtung (14) zur Rückwandung (4) dieses in der Ausnehmung (15) an der Rückwandung (4) anliegt.

5. Komposter nach einem der Ansprüche 1 bis 4,
**dadurch gekennzeichnet,**
**daß** das Hebelelement (7) ein U-förmiger Drahtbügel mit zwei über einen Verbindungsstab verbundenen Hebelarmen (9) ist, wobei die Hebelarme (9) an ihrem freien Ende zu einem Gelenkfortsatz (11) abgewinkelt sind.

6. Komposter nach Anspruch 5,
**dadurch gekennzeichnet,**
**daß** in den Seitenwandungen (5) jeweils eine Gelenköse (12) zum Aufnehmen eines der Gelenkfortsätze (11) ausgebildet ist.

7. Komposter nach einem der Ansprüche 1 bis 4,
**dadurch gekennzeichnet,**
**daß** das Hebelelement zwei separat ausgebildete Hebelarme aufweist, die jeweils an einer der Seitenwandungen (5) und am Deckelelement (1) angelenkt sind.

**8.** Komposter nach einem der Ansprüche 1 bis 7,
**dadurch gekennzeichnet,**
**daß** das Deckelelement (1) aus zwei separaten Hälften (1a,1b) ausgebildet ist, wobei eine Hälfte mit einem Schwenkmechanismus benachbart zur Rückwandung schwenkbar am Komposterbehälter (2) und die andere Hälfte mit einem gleich ausgebildeten Schwenkmechanismus benachbart zu einer Frontwandung des Komposterbehälters (2) schwenkbar an diesem befestigt sind.

**9.** Komposter für einen Komposter, insbesondere nach einem der Ansprüche 1 bis 8,
**dadurch gekennzeichnet,**
**daß** ein Deckel (1) verschieblich auf einem Komposterbehälter (2) derart gelagert ist, daß er in eine erste Öffnungsstellung verschoben werden kann, und der Deckel um eine Achse (B-B) schwenkbar gelagert ist, wobei in der ersten Öffnungsstellung sich die Schwenkachse (B-B) in einem Bereich außerhalb des Komposterbehälters (2) befindet, so daß der Deckel (1) um diese Schwenkachse B-B verschwenkt werden kann.

**Claims**

**1.** Composter with a cover device, with
a plate-shaped cover element (1) for covering a compost container (2) which is open at the top and has a rear wall (4) and two side walls (5) adjoining the rear wall (4),
**characterised in that**
a lever element (7) is hinged to the cover element (1) and to each of the side walls (5) of the compost container (2) and that the following formula applies:

$$l > \sqrt{a^2 + b^2}$$

wherein 1 is the distance between the hinge point (B) of the lever element (7) on the cover element (1) and the hinge point (A) of the lever element on the side walls (5), a is the distance of the hinge point (A) of the lever element (7) on the side walls (5) from the rear wall (4), and b is the distance of the hinge point (A) of the lever element (7) on the side walls (5) from the upper edge (13) of the compost container (2).

**2.** Composter according to claim 1,
**characterised in that**
the lever element (7) is angled towards the rear wall (4) at a distance of

$$l' \approx \sqrt{a^2 + b^2}$$

from the hinge point (A) of the lever element (7) on the side walls (5).

**3.** Composter according to claim 1 or 2,
**characterised in that**
the rear wall (4) and the side walls (5) have flat surfaces and are placed together at right-angles to one another.

**4.** Composter according to any of claims 1 to 3,
**characterised in that**
in the area of the lever element (7), the rear wall (4) has a recess (15) such that, when the lever element (7) is swivelled in the direction (14) of the rear wall (4), it fits into the recess (15) of the rear wall (4).

**5.** Composter according to any of claims 1 to 4,
**characterised in that**
the lever element (7) is a U-shaped wire bracket with two lever arms (9) joined by a connecting bar, wherein the lever arms (9) are angled at their free ends to form a hinged extension (11).

**6.** Composter according to claim 5,
**characterised in that**
in each of the side walls (5), a hinged eyebolt (12) is made to accommodate one of the hinged extensions (11).

**7.** Composter according to any of claims 1 to 4,
**characterised in that**
the lever element has two separate lever arms, each hinged at one of the side walls (5) and at the cover element (1).

**8.** Composter according to any of claims 1 to 7,
**characterised in that**
the cover element (1) is made of two separate halves (1a, 1b), wherein one half is fastened by a swivel mechanism adjacent to the rear wall so as to pivot on the compost container (2), and the other half is fastened by an identical swivel mechanism adjacent to a front wall of the compost container (2) so as to pivot on the latter.

**9.** Cover device for a composter, in particular according to any of claims 1 to 8,
**characterised in that**
a cover (1) is mounted slidably on a compost container (2) in such a way that it may be moved into a first open position, and the cover is pivotably mounted around an axis (B-B), wherein in the first open position the swivel axis (B-B) is located in an area outside the compost container (2), so that the cover (1) may be swivelled around this swivel axis (B-B).

**Revendications**

1. Composteur à dispositif formant couvercle, comportant un élément de couvercle (1) en forme de plaque pour recouvrir un récipient de composteur (2) ouvert en haut, une paroi arrière (4) et deux parois latérales (5) adjacentes à la paroi arrière (4), **caractérisé en ce qu'**un élément de levier (7) est articulé sur l'élément de couvercle (1) et sur chacune des parois latérales (5) du récipient de composteur (2), et **en ce que** la formule suivante est satisfaite :

$$l > \sqrt{a^2 + b^2}$$

1 étant la distance entre le point d'articulation (B) de l'élément de levier (7) sur l'élément de couvercle (1) et le point d'articulation (A) de l'élément de levier sur les parois latérales (5), a étant la distance entre le point d'articulation (A) de l'élément de levier (7) sur les parois latérales (5) et la paroi arrière (4), et b étant la distance entre le point d'articulation (A) de l'élément de levier (7) sur les parois latérales (5) et l'arête supérieure (13) du récipient de composteur (2).

2. Composteur selon la revendication 1, **caractérisé en ce que** l'élément de levier (7) est coudé en direction de la paroi arrière (4) à la distance

$$l' \approx \sqrt{a^2 + b^2}$$

depuis le point d'articulation (A) de l'élément de levier (7) sur les parois latérales (5).

3. Composteur selon l'une ou l'autre des revendications 1 et 2, **caractérisé en ce que** la paroi arrière (4) et les parois latérales (5) sont réalisées à surface plane et sont mutuellement rapportées à angle droit.

4. Composteur selon l'une des revendications 1 à 3, **caractérisé en ce que** la paroi arrière (4) présente dans la zone de l'élément de levier (7) un évidement (15) de telle sorte que lors d'un pivotement de l'élément de levier (7) en direction (14) de la paroi arrière (4), ledit élément prend appui dans l'évidement (15) sur la paroi arrière (4).

5. Composteur selon l'une des revendications 1 à 4, **caractérisé en ce que** l'élément de levier (7) est un étrier de fil métallique en forme de U comportant deux bras de levier (9) reliés par une barrette de liaison, les bras de levier (9) étant coudés à leur extrémité libre pour former un prolongement articulé (11).

6. Composteur selon la revendication 5, **caractérisé en ce qu'**un oeillet d'articulation respectif (12) destiné à recevoir l'un des prolongements articulés (11) est réalisé dans les parois latérales (5).

7. Composteur selon l'une des revendications 1 à 4, **caractérisé en ce que** l'élément de levier comprend deux bras de levier réalisés séparément qui sont articulés chacun sur l'une des parois latérales (5) et sur l'élément de couvercle (1).

8. Composteur selon l'une des revendications 1 à 7, **caractérisé en ce que** l'élément de couvercle (1) est réalisé par deux moitiés séparées (1a, 1b), une moitié étant fixée avec faculté de pivotement par un mécanisme de pivotement sur le récipient de composteur (2) au voisinage de la paroi arrière, et l'autre moitié étant fixée avec faculté de pivotement par un mécanisme de pivotement réalisé identique sur le récipient de composteur (2) au voisinage d'une paroi frontale de celui-ci.

9. Dispositif formant couvercle pour un composteur selon l'une des revendications 1 à 8, **caractérisé en ce qu'**un couvercle (1) est monté avec faculté de translation sur un récipient de composteur (2), de manière à pouvoir être déplacée dans une première position d'ouverture, et le couvercle est monté avec faculté de pivotement autour d'un axe (B-B), et dans la première position d'ouverture l'axe de pivotement (B-B) se trouve dans une zone à l'extérieur du récipient de composteur (2), de sorte que le couvercle (1) peut être pivoté autour de cet axe de pivotement (B-B).

Fig. 1

Fig. 5

Fig. 2

Fig. 6

Fig. 3

Fig. 7

Fig. 4